# FASCICULE DE BREVET EUROPEEN

(11) **EP 3 223 292 B1**
(45) Date de publication et mention de la délivrance du brevet: **12.12.2018**
(21) Numéro de dépôt: 17162535.3
(22) Date de dépôt: 23.03.2017
(51) Int. Cl.: H01H 9/34, H01H 73/18, H01H 33/08

(54) **APPAREIL ÉLECTRIQUE DE COUPURE D'UN COURANT ÉLECTRIQUE DANS L'AIR COMPORTANT UN DISPOSITIF DE FILTRAGE DES GAZ DE COUPURE AMÉLIORÉ**
ELEKTRISCHER SCHUTZSCHALTER FÜR UNTERBRECHUNG IN DER LUFT, DER EINE VERBESSERTE FILTERVORRICHTUNG FÜR DAS UNTERBRECHUNGSGAS UMFASST
ELECTRICAL DEVICE FOR INTERRUPTING AN ELECTRICAL CURRENT IN AIR COMPRISING AN IMPROVED GAS FILTERING APPARATUS

(30) Priorité: 24.03.2016 FR 1652540
(43) Date de publication de la demande: 27.09.2017
(73) Titulaire: Schneider Electric Industries SAS, 92500 Rueil-Malmaison (FR)
(72) Inventeur: RIVAL, Marc, 38050 GRENOBLE Cedex 09 (FR); DOMEJEAN, Eric, 38050 GRENOBLE Cedex 09 (FR); ROTA, Daniel, 38050 GRENOBLE Cedex 09 (FR); BRUN, Grégoire, 38050 GRENOBLE Cedex 09 (FR)
(74) Mandataire: Lavoix

(56) Documents cités:
- EP-A2- 1 298 687
- FR-A1- 2 778 788

## Description

La présente invention concerne un appareil électrique de coupure d'un courant électrique dans l'air, tel qu'un disjoncteur ou un contacteur, comportant un dispositif de filtrage des gaz de coupure amélioré.

De façon connue, des appareils électriques, tels que des disjoncteurs ou des contacteurs, permettent d'interrompre la circulation d'un courant électrique au sein d'un circuit électrique, tel qu'un réseau de distribution domestique ou industriel. Typiquement ces appareils comportent des contacts électriques séparables raccordés à des terminaux d'entrée et de sortie d'un courant électrique. Ces contacts électriques sont sélectivement déplaçables entre une position fermée, dans laquelle ils permettent au courant électrique de circuler entre les terminaux et, alternativement, une position ouverte dans laquelle ils sont distants l'un de l'autre afin d'empêcher la circulation de ce courant électrique.

Il est notamment connu que, lorsque ces contacts électriques sont déplacés vers leur position ouverte en présence d'un courant électrique, il peut se former un arc électrique entre ces deux contacts électriques. Cet arc électrique ionise l'air ambiant dans l'appareil, ce qui génère des gaz, dits gaz de coupure, qui sont ensuite rejetés à l'extérieur de l'appareil. L'arc électrique est ensuite éteint par une chambre de coupure d'arc de l'appareil, afin d'interrompre la circulation du courant électrique. Les gaz de coupure présentent une température élevée, typiquement supérieure à 4000°C et contiennent des particules telles que des suies ou des particules métalliques en suspension qui proviennent généralement d'une fusion partielle de constituants internes de l'appareil sous l'action de l'arc électrique.

Les gaz de coupure doivent donc être refroidis et déionisés, au moyen d'un système de filtration dédié de l'appareil, avant d'être rejetés à l'extérieur de l'appareil. Cela permet d'éviter un rebouclage du courant d'arc électrique à l'extérieur de l'appareil, par exemple entre les terminaux d'entrée et/ou de sortie et des pièces métalliques externes, du fait de la conductivité électrique importante du gaz de coupure ionisé. Un tel rebouclage conduit à la formation d'un court-circuit, causant un défaut de sécurité inacceptable et dangereux. Le document "FR 2 778 788 A1" décrit un appareil électrique de coupure d'un courant électrique dans l'air, selon le préambule de la revendication 1.

Les systèmes de filtration connus comportent généralement un filtre incluant des éléments métalliques. Lorsque le gaz de coupure est très chaud ou lorsque l'intensité de l'arc électrique est élevée, il existe un risque de rebouclage de l'arc électrique au travers du filtre.

Pour y remédier, EP 1 251 533 A1 décrit un diffuseur de gaz, interposé entre un orifice d'échappement des gaz de la chambre de coupure et un filtre des gaz de coupure. Le diffuseur de gaz a pour but de laisser passer, vers le filtre, les gaz de coupure issus de la chambre de coupure et d'empêcher le passage d'un courant électrique en direction du filtre depuis la chambre de coupure.

Ce diffuseur de gaz ne donne cependant pas entière satisfaction lorsqu'il est utilisé dans des appareils électriques de puissance présentant un pouvoir de coupure élevé. Par « pouvoir de coupure élevé », on entend que le courant de coupure en court-circuit est supérieur ou égal à 50kA. Du fait de l'intensité élevée des courants électriques, le diffuseur ne parvient pas à empêcher un rebouclage du courant électrique dans le gaz de coupure qui le traverse. Son utilisation fait donc courir un risque d'apparition d'un défaut soit par rebouclage externe, dans lequel un arc électrique se forme entre les terminaux de l'appareil électrique et des parties externes, soit par rebouclage interne, dans lequel un arc électrique passe au travers du filtre et court-circuite des séparateurs de la chambre de coupure. Cela présente un danger considérable pour des utilisateurs ou pour le circuit électrique dans lequel l'appareil électrique est utilisé. De plus, il est difficile de modifier les dimensions de ce diffuseur, par exemple pour augmenter la longueur de la trajectoire suivie par le gaz de coupure qui y circule, du fait des contraintes d'encombrement qui pèsent sur l'intégration du diffuseur de gaz au sein de l'appareil électrique.

C'est à ces inconvénients qu'entend plus particulièrement remédier l'invention, en proposant un appareil électrique de coupure d'un courant électrique dans l'air, présentant un système de filtration des gaz de coupure pourvu d'un diffuseur de gaz qui assure une meilleure protection contre le risque de rebouclage du courant d'arc dans le filtre, tout en conservant des propriétés mécaniques satisfaisante.

A cet effet, l'invention concerne un appareil électrique de coupure d'un courant électrique, comportant :
- deux contacts électriques séparables raccordés à des terminaux d'entrée et de sortie d'un courant électrique ;
- une chambre de coupure d'un arc électrique, pour éteindre un arc électrique formé lors de la séparation des contacts électriques, cette chambre de coupure étant pourvue d'un orifice d'échappement d'un gaz de coupure,
- un système de filtration du gaz de coupure, placé en sortie de l'orifice d'échappement et comportant un filtre et un diffuseur de gaz réalisé en matériau électriquement isolant, le diffuseur de gaz étant intercalé entre l'orifice d'échappement et le filtre.

Le diffuseur de gaz comporte, superposées entre elles, une couche centrale et deux couches extérieures disposés de part et d'autre de la couche centrale, la couche centrale étant pourvue de premières ouvertures traversantes, chaque couche extérieure étant pourvue de deuxièmes ouvertures traversantes, les premières ouvertures étant désalignés par rapport aux deuxièmes ouvertures de sorte que chacune des deuxièmes ouvertures débouche sur une portion pleine de la couche centrale dépourvue de première ouverture.

Grâce à l'invention, la structure en trois couches du diffuseur de gaz ainsi que la disposition des premières et des deuxièmes ouvertures traversantes permettent d'allonger la trajectoire suivie par le gaz de coupure lorsqu'il est expulsé de la chambre de coupure en direction du filtre. Cela limite le risque de rebouclage de l'arc électrique en sortie du diffuseur lorsque le flux de gaz de coupure est important ou fortement ionisé. De plus, la structure en trois couches assure une bonne compacité, ainsi qu'une rigidité et une tenue mécanique suffisantes du diffuseur, pour qu'il puisse résister aux contraintes mécaniques exercées par le flux de gaz de coupure lorsqu'il est éjecté de la chambre de coupure, du fait de sa pression élevée.

Selon des aspects avantageux mais non obligatoires de l'invention, un tel appareil électrique peut incorporer une ou plusieurs des caractéristiques suivantes, prises dans toute combinaison techniquement admissible :
- L'une ou l'autre de la couche centrale d'une part et des couches extérieures d'autre part comporte une plaque rigide en matière plastique, l'autre de la couche centrale d'une part et des couches extérieures d'autre part comporte une plaque d'un matériau synthétique comportant des fibres de polyamide aromatique
- La couche centrale comporte une plaque rigide en matière plastique, les couches extérieures comportent chacune une plaque d'un matériau synthétique comportant des fibres de polyamide aromatique.
- Les couches extérieures sont reliées entre elles par un raccord flexible.
- La plaque rigide en matière plastique comporte, sur au moins une de ses faces, des plots d'espacement s'étendant en saillie par rapport à cette face, pour maintenir la plaque d'un matériau synthétique adjacente à cette face à une distance prédéterminée de la plaque rigide dans une configuration assemblée du diffuseur de gaz.
- Les premières ouvertures ont une forme de losange dont les côtés sont incurvés vers le centre du losange.
- Chacune des couches extérieures présente une porosité comprise entre 10% et 40%, de préférence entre 15% et 30%.
- Les premières ouvertures sont disposées en quinconce par rapport aux deuxièmes ouvertures.
- Les couches extérieures sont identiques.

L'invention sera mieux comprise et d'autres avantages de celle-ci apparaîtront plus clairement à la lumière de la description qui va suivre, d'un mode de réalisation d'un appareil électrique donné uniquement à titre d'exemple et faite en référence aux dessins annexés dans lesquels :
- la figure 1 représente schématiquement, selon une vue en coupe longitudinale, d'un appareil électrique de coupure d'un courant électrique selon un mode de réalisation de l'invention ;
- la figure 2 est une représentation schématique, selon une vue éclatée, d'un système de filtration de gaz de coupure de l'appareil électrique de la figure 1 ;
- la figure 3 est une représentation schématique, selon une vue en perspective, d'un diffuseur de gaz du système de filtration de gaz de coupure de la figure 2, dans une configuration montée ;
- les figures 4 et 5 sont des représentations schématiques, selon une vue en perspective, du diffuseur de gaz de la figure 3 dans une configuration démontée ;
- la figure 6 représente schématiquement, selon une vue de face, une ouverture traversante ménagée sur une couche centrale du diffuseur de gaz des figures 2 à 4 ;
- la figure 7 représente schématiquement, selon une vue de face, la disposition des centres géométriques d'ouvertures ménagées sur des couches du diffuseur de gaz des figures 2 à 5.

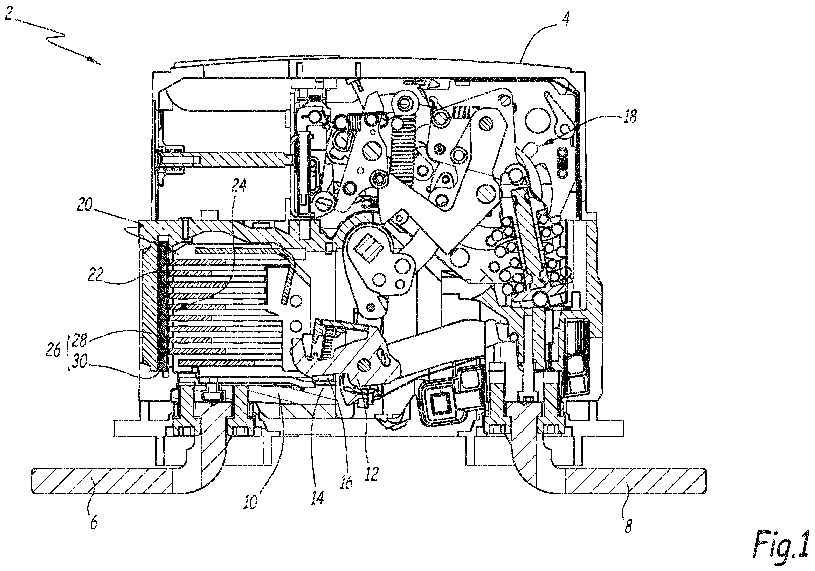

La figure 1 représente un appareil électrique 2 de coupure de courant électrique, destiné à être utilisé dans un circuit électrique afin de permettre l'interruption d'une alimentation en courant électrique de ce circuit électrique, par exemple en réponse à un signal de commande ou lorsqu'une anomalie de fonctionnement est détectée, telle qu'un court-circuit ou une surintensité.

Dans cet exemple, l'appareil électrique 2 est un disjoncteur à basse tension à courant continu, par exemple prévu pour une tension électrique de 415V et pour des courants électriques d'intensité supérieure à 630 A. Le courant de coupure en court-circuit de ce disjoncteur est supérieur ou égal à 70kA. En variante, le disjoncteur est à courant alternatif.

L'appareil électrique 2 comporte un boîtier 4 et des terminaux d'entrée 6 et de sortie 8 d'un courant électrique aptes à raccorder l'appareil électrique 2 à un circuit électrique, par exemple à des barres de connexion d'un tableau électrique. Les terminaux 6 et 8 sont réalisés en un matériau électriquement conducteur, tel que du cuivre.

L'appareil électrique 2 comporte également des contacts électriques séparables 10 et 12 portant chacun un plot de contact, ou pastille de contact, respectivement 14, 16 raccordées respectivement aux terminaux d'entrée 6 et de sortie 8. Les plots de contact 14 et 16 sont réalisés en un matériau électriquement conducteur, par exemple du cuivre.

Les contacts électriques 10 et 12 sont déplaçables l'un par rapport à l'autre, sélectivement et réversiblement, entre des positions ouverte et fermée.

Dans la position fermée, les plots de contact 14 et 16 des contacts électriques 10 et 12 sont en contact direct l'un avec l'autre, autorisant ainsi la circulation d'un courant électrique entre les terminaux d'entrée 6 et 8.

Dans la position ouverte, les plots de contact 14 et 16 sont distants l'un de l'autre, par exemple d'une distance supérieure ou égale à 5 mm ou à 10 mm. En l'absence d'arc électrique entre les plots de contact 14 et 16, le courant électrique est empêché de circuler entre les terminaux 6 et 8.

L'appareil électrique 2 comporte également un mécanisme de déplacement 18 configuré pour déplacer l'un par rapport à l'autre les contacts électriques séparables 10 et 12 entre leur position ouverte et fermée, par exemple en réponse à la détection d'une situation anormale telle qu'une surintensité du courant électrique. De tels mécanismes de déplacement 18 sont bien connus et ne sont pas décrits plus en détail. Ici, le contact électrique 10 est fixe par rapport au boîtier 4 et seul le contact électrique 12 est apte à être déplacé par le mécanisme de déplacement 18.

De façon connue, lorsque les contacts 10 et 12 sont séparés l'un de l'autre de leur position fermée vers leur position ouverte alors qu'un courant électrique circule entre les terminaux 6 et 8, il peut se former un arc électrique entre les plots de contact 14 et 16. Un tel arc électrique permet la circulation du courant entre les terminaux 6 et 8 et doit être supprimé, c'est-à-dire éteint, pour interrompre la circulation du courant. L'intérieur du boîtier 4 est ici rempli d'air.

A cet effet, l'appareil électrique 2 comporte une chambre de coupure 20 d'un arc électrique. La chambre de coupure 20 est placée à l'intérieur du boîtier 4, en regard des plots de contact 14 et 16, de façon à recevoir un arc électrique lors de sa formation. La chambre de coupure 20 comporte un empilement de plaques de coupure d'arc 22, réalisées en un matériau métallique et configurées pour éteindre un tel arc électrique, par exemple par fractionnement de l'arc.

La chambre de coupure 20 est pourvue d'un orifice d'échappement de gaz 24 et débouchant à l'extérieur du boîtier 4.

De façon connue, l'apparition de l'arc électrique entre les contacts 14 et 16 ionise et chauffe fortement l'air ambiant. Il en résulte la formation d'un gaz, dit gaz de coupure, présentant une température élevée, typiquement supérieure à 5000°C.

Lors de la formation d'un arc électrique, ce gaz de coupure est éjecté en dehors de la chambre de coupure 20, et donc du boîtier 4, par l'intermédiaire de l'orifice d'échappement 24.

Ce gaz de coupure doit être refroidi et dépollué avant son rejet à l'extérieur, pour des raisons de sécurité. A cet effet, l'appareil électrique 2 comporte un système de filtration 26 des gaz de coupure, placé en sortie de l'orifice d'échappement 24.

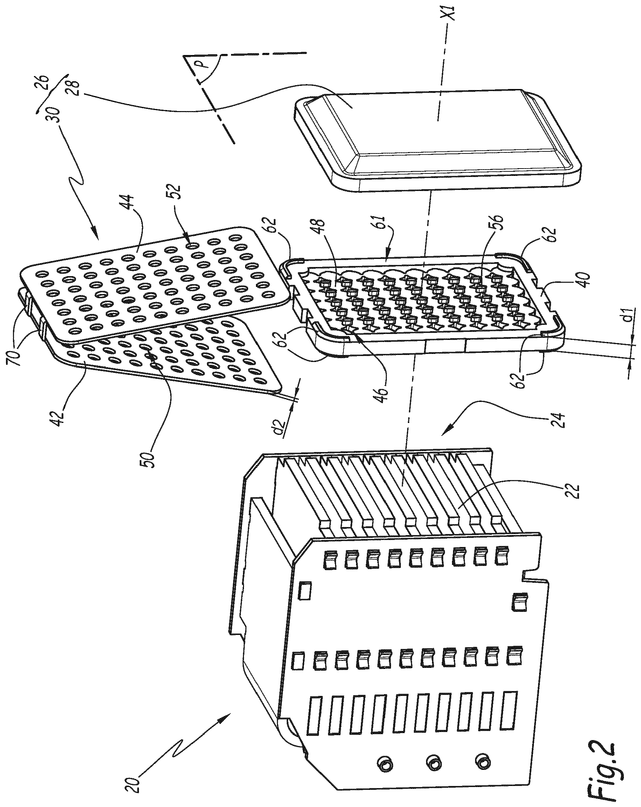

Comme illustré à la figure 2, le système de filtration 26 comporte un filtre 28 et un diffuseur de gaz 30. Ici, le système de filtration 26 est illustré selon une vue éclatée. Dans une configuration montée du système de filtration 26, le diffuseur de gaz 30 est en contact direct avec l'orifice d'échappement 24 et avec le filtre 28.

Le filtre 28 a pour fonction de refroidir le gaz de coupure à une température permettant son relâchement à l'extérieur du boîtier 4, par exemple inférieure à 2000°C. Le filtre 28 dépollue en outre le gaz de coupure de sorte à ce qu'il présente une concentration en particules électriquement conductrices suffisamment faible pour écarter tout risque de court-circuit par rebouclage de courant à l'extérieur du boîtier 4.

Le filtre 28 comporte ici un écran poreux, formé par superposition de plusieurs toiles métalliques tissées parallèles entre elles. Les toiles métalliques présentent successivement une ouverture de maille qui va en décroissant en s'éloignant de l'orifice d'échappement 24 vers l'extérieur du boîtier 4. Un exemple d'un tel filtre est décrit dans EP 0 817 223 B1.

Le filtre 28 s'étend ici selon un plan géométrique P. Ce plan P est ici parallèle à l'orifice d'échappement 24. Les gaz de coupure s'échappent de la chambre de coupure 20 selon une direction essentiellement perpendiculaire au plan P. On note « X1 » un axe fixe de l'appareil électrique 2 perpendiculaire au plan P.

Le diffuseur de gaz 30 est intercalé entre l'orifice d'échappement 24 et le filtre 28 de telle sorte que les gaz de coupure sortant par l'orifice d'échappement 24 soient forcés de circuler au travers du diffuseur de gaz 30 pour atteindre le filtre 28. Ici, les gaz de coupure ne peuvent pas sortir de la chambre de coupure 20 ailleurs que par l'orifice d'échappement 24.

Le diffuseur de gaz 30 a pour fonction de laisser passer le gaz de coupure issu de la chambre de coupure 20 en direction du filtre 28, tout en empêchant le passage d'un courant électrique dans le filtre 28. En effet, le filtre 28 étant réalisé en matière métallique, il est électriquement conducteur. Il existe donc un risque de rebouclage du courant électrique à l'intérieur du filtre 28.

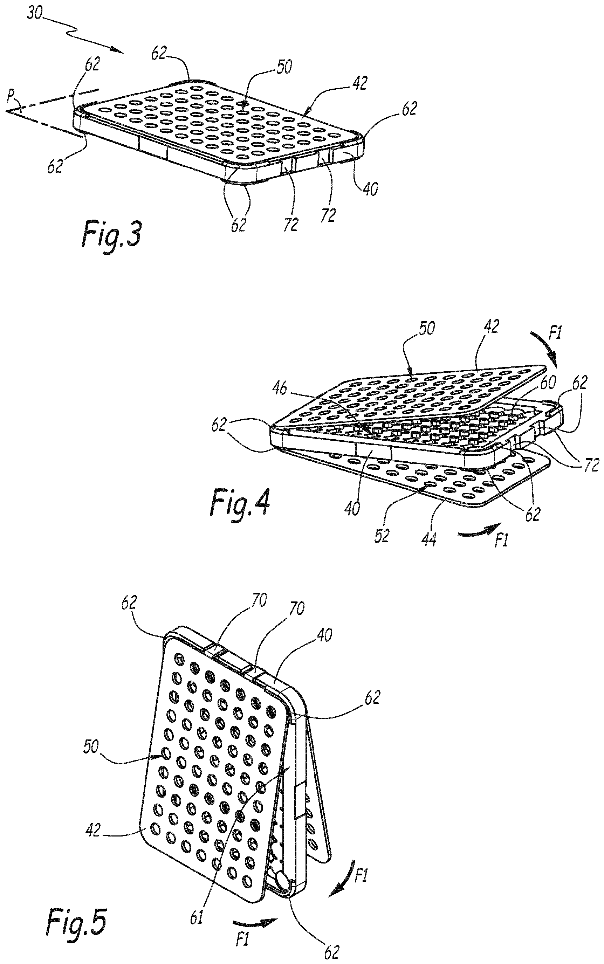

Les figures 3, 4 et 5 représentent un mode de réalisation du diffuseur de gaz 30, respectivement selon une configuration montée et selon deux configurations démontées.

Le diffuseur de gaz 30 comporte une couche centrale 40 et deux couches extérieures 42 et 44 disposées de part et d'autre de la couche centrale 40. La couche centrale 40 et les couches extérieures 42 et 44 sont superposées entre elles, parallèlement les unes aux autres. Avantageusement, les couches extérieures 42 et 44 sont fixées à la couche centrale 40.

La couche centrale 40 et les couches extérieures 42, 44 présentent une forme plane. Dans ce qui suit, le « plan principal » d'une couche fait référence au plan dans lequel elle s'étend. Les « faces principales » d'une couche sont les faces de cette couche qui sont parallèles au plan principal de cette couche. Ici, les couches 40, 42 et 44 s'étendent parallèlement au plan géométrique P.

Les couches 40, 42 et 44 ont chacune une forme de quadrilatère, par exemple un parallélépipède rectangle. A titre d'exemple illustratif, la couche centrale 40 présente des dimensions de 55mm de long et de 40mm de large. Chaque couche 42, 44 a des dimensions de 54mm de long et 40mm de large. Ces dimensions sont mesurées parallèlement au plan P.

Par exemple, la couche 42 est disposée d'un côté amont de la couche centrale 40, en contact avec l'orifice d'échappement 24. La couche 44 est disposée d'un côté aval de la couche 40, en contact avec le filtre 28. Les termes « amont » et « aval » sont ici définis en référence au sens d'écoulement du gaz de coupure depuis l'orifice d'échappement 24 vers le filtre 28.

La couche centrale 40 comporte des premières ouvertures 46 traversantes ménagées sur des faces opposées de cette couche 40 et parallèles au plan principal. Les ouvertures 46 traversent la couche centrale 40 selon une direction essentiellement perpendiculaire au plan principal de la couche 40.

La couche centrale 40 est ici une plaque pleine dans laquelle les ouvertures 46 sont ménagées. La référence 48 désigne des portions pleines de la couche centrale 40 dépourvues d'ouvertures 46.

Dans cet exemple, les premières ouvertures 46 de la couche centrale 40 sont identiques entre elles et présentent les mêmes dimensions. Ces premières ouvertures 46 sont disposées régulièrement sur la superficie de la couche centrale 40. Par exemple, ces premières ouvertures 46 sont disposées le long de rangées et de colonnes rectilignes et perpendiculaires les unes aux autres. Ici, les ouvertures 46 sont disposées le long de six rangées et de neuf colonnes perpendiculaires entre elles.

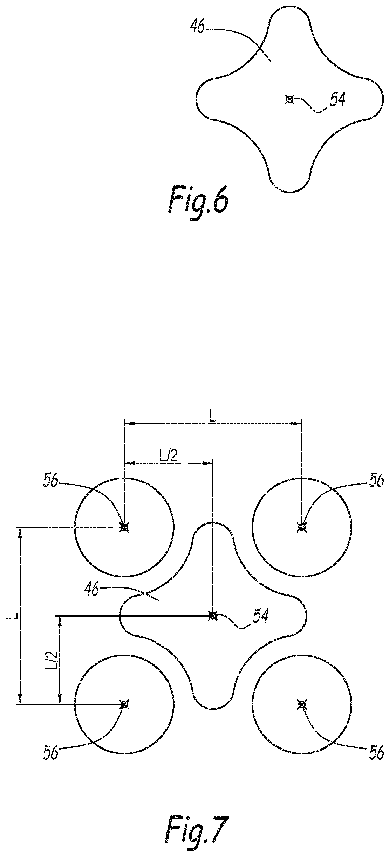

Avantageusement, chaque première ouverture 46 présente une forme de losange régulier, dont les côtés sont incurvés vers le centre 54 du losange, comme illustré à la figure 6. Cette forme de losange a pour avantage de procurer une porosité élevée de la couche centrale 40, tout en limitant suffisamment le risque de rebouclage du courant électrique lors du passage du gaz de coupure. En variante, d'autres formes sont possibles, par exemple une ellipse, ou un losange dont les côtés sont rectilignes, ou bien une fente droite ou recourbée.

Chacune des couches extérieures 42 et 44 est pourvue de deuxièmes ouvertures traversantes, respectivement notées 50 et 52. Les ouvertures 50 et 52 sont ménagées sur des faces opposées et parallèles au plan principal de la couche extérieure, respectivement, 42 et 44. Les ouvertures 50 et 52 traversent la couche, respectivement, 42 et 44 selon une direction essentiellement perpendiculaire au plan principal de cette couche. Les ouvertures 50 et 52 présentent une forme de disque. Les ouvertures 50 et 52 sont ici identiques entre elles et présentent les mêmes dimensions.

Dans cet exemple, chacune des premières ouvertures 46 présente une forme cylindrique d'axe parallèle à X1 et de section constante sur toute l'épaisseur de la couche centrale 40. Il en va de même pour les deuxièmes ouvertures 50 et 52 vis-à-vis des couches extérieures 42 et 44.

Dans cet exemple, les couches extérieures 42 et 44 sont identiques. Aussi, seule la couche extérieure 42 est décrite dans ce qui suit. Tout ce qui est décrit en référence à la couche extérieure 42 s'applique également à la couche extérieure 44.

Le nombre et les dimensions des deuxièmes ouvertures 50 sont choisis de telle sorte à ce que la couche extérieure 42 présente une porosité comprise entre 10% et 40%, de préférence entre 15% et 30%.

Du fait que les deuxièmes ouvertures 50 présentent un diamètre constant sur toute l'épaisseur de la couche extérieure 42, la porosité de la couche 42 peut se calculer en calculant la superficie de toutes les deuxièmes ouvertures 50 portées par cette couche 42 divisée par la superficie totale d'une face de la couche 42.

Avantageusement, la porosité de la couche extérieure 42 est égale à la porosité du filtre 28, à 20% près ou, de préférence à 10% près. Par « porosité du filtre 28 », on désigne ici la porosité de la toile métallique tissée du filtre 28 qui se trouve sur l'extrémité de l'empilement de toiles métalliques du côté du diffuseur de gaz 30. La porosité d'une telle toile métallique du filtre 28 est par exemple définie comme étant la superficie de toutes les ouvertures de maille de cette toile, divisée par la superficie totale de cette toile. Compte tenu des caractéristiques des toiles métalliques typiquement utilisées pour former le filtre 28, la porosité de la couche 42 est de préférence supérieure ou égale à 20% et inférieure ou égale à 25%.

A titre d'exemple illustratif, la couche 42 comporte soixante-dix ouvertures 50 chacune d'un diamètre de 3mm. La superficie totale des ouvertures 50 est égale à 489mm², pour une superficie totale de la couche 42 égale à 2160mm², soit une porosité de 22,6% environ.

Ainsi, on évite de trop réduire le débit du gaz de coupure et d'entraver excessivement son écoulement hors de l'appareil électrique 2 lorsqu'il traverse le diffuseur de gaz 30.

Les ouvertures 50 sont espacées les unes avec les autres régulièrement, avec un pas d'espacement L, ici égal à 5 mm. Le pas d'espacement L est mesuré entre les centres géométriques 56 respectifs de deux ouvertures 50 consécutives selon une direction parallèle au plan P. En configuration montée du diffuseur de gaz 30, chaque deuxième ouverture 50 de la couche 42 est alignée avec une ouverture 52 correspondante de la couche 44.

Dans la configuration montée du diffuseur de gaz 30, lorsque les couches centrale 40 et extérieures 42 et 44 sont superposées les unes avec les autres, les ouvertures 46 sont désalignées par rapport aux deuxièmes ouvertures 50 et 52, selon une direction parallèle au plan P, de sorte que chacune des deuxièmes ouvertures 50 et 52 débouche sur une portion pleine 48 de la couche centrale 40. Ainsi, le gaz de coupure issu de l'orifice d'échappement 24 doit cheminer à l'intérieur du diffuseur de gaz 30 entre la couche centrale 40 et les couches extérieures 42, 44 avant de pouvoir atteindre le filtre 28.

Dans cet exemple, en configuration montée du diffuseur de gaz 30, les deuxièmes ouvertures 50 sont disposées en quinconce par rapport aux premières ouvertures 46, comme illustré à la figure 7. Plus précisément, la projection orthogonale, dans le plan P, du centre 54 de l'ouverture 46, est décalée, par rapport à chaque projection orthogonale, dans le même plan P, du centre géométrique 56 des ouvertures 50, d'une distance égale à L/2 selon deux directions perpendiculaires du plan P.

D'autres dispositions sont toutefois possibles, à condition qu'elles évitent tout recouvrement entre les ouvertures 46 et 50, c'est-à-dire que la projection géométrique orthogonale, dans le plan P, de la superficie de chaque première ouverture 46, est disjointe de la projection géométrique orthogonale, dans ce même plan P, de chacune des deuxièmes ouvertures 50 et 52.

A titre d'exemple illustratif, les ouvertures 50 sont disposées le long de sept rangées et de dix colonnes rectilignes et perpendiculaires entre elles et étant parallèles, respectivement aux rangées et aux colonnes selon lesquelles sont disposées les ouvertures 46 précédemment décrites.

Le diffuseur de gaz 30 est électriquement isolant, c'est-à-dire qu'il est réalisé en matériaux électriquement isolants. Par exemple, la conductivité électrique du diffuseur de gaz 30 est au moins dix fois inférieure, de préférence au moins cent fois inférieure, à la conductivité électrique du filtre 28.

L'une ou l'autre de la couche centrale 40 d'une part et des couches extérieures 42, 44 d'autre part comporte une plaque rigide en matière plastique, l'autre de la couche centrale 40 d'une part et des couches 42, 44 extérieures d'autre part comporte une plaque d'un matériau synthétique comportant des fibres de polyamide aromatique, également connues sous le nom « aramide ».

Selon un mode de réalisation préféré de l'invention, la couche centrale 40 comporte le matériau plastique rigide. Les couches extérieures 42 et 44 comportent chacune la plaque du matériau synthétique comportant des fibres de polyamide aromatiques

Par exemple, la couche centrale 40 est une pièce moulée d'un matériau plastique thermodurcissable, tel que du polyester. La couche 42 est une plaque de papier synthétique comportant des fibres de polyamide aromatique calandrées à chaud, telles que du méta phénylène isophtalamide. Par exemple, on utilise une feuille du matériau commercialisée par la société « DuPont De Nemours » sous la référence « Nomex® T410 ».

La couche centrale 40 présente une épaisseur d1 inférieure à 5 mm, de préférence inférieure ou égale à 2,5 mm et supérieure ou égale à 1mm. La couche 42 présente une épaisseur d2 comprise entre 0,5 et 1 mm, de préférence comprise au sein de l'intervalle [0,6 mm ; 0,8 mm]. Ainsi, l'épaisseur totale du diffuseur 3 est inférieure à 10 mm, de préférence à 5 mm, de préférence encore à 3 mm. Les épaisseurs sont ici mesurées, pour chaque couche, selon une direction perpendiculaire au plan principal de cette couche. Ici, en configuration montée du diffuseur de gaz 30, les épaisseurs sont mesurées selon l'axe X1 perpendiculaire au plan P.

Ce choix d'un tel matériau synthétique permet d'assurer une stabilité mécanique suffisante pour résister aux contraintes mécaniques exercées sur le diffuseur de gaz 30 lors du passage du gaz de coupure, du fait de la pression élevée de ce dernier. En particulier, ce matériau synthétique assure une bonne tenue du diffuseur face aux températures élevées du gaz de coupure. D'une part, un tel matériau est faiblement gazogène. De plus, du fait de l'absence de fibre de verre au sein d'un tel matériau synthétique, on réduit le risque de claquage diélectrique de ce matériau lors du passage du gaz de coupure. Par absence de fibre de verre, on entend ici que la concentration massique en fibre de verre au sein de ce matériau est inférieure ou égale à 0,01% ou, préférentiellement, inférieure ou égale à 0,001%.

Du fait de cette structure, le diffuseur de gaz 30 présente des performances satisfaisantes en termes de protection contre le rebouclage du courant dans le filtre 28. Son épaisseur réduite lui assure une grande compacité, ce qui le rend compatible avec les contraintes de dimensionnement imposées par la structure du système de filtration 26 et de la chambre de coupure 20.

Ce diffuseur de gaz 30 présente également une tenue mécanique satisfaisante, grâce à la présence d'au moins une plaque rigide et grâce au fait qu'il est maintenu en contact direct entre le filtre 28 et la chambre de coupure 20, qui présentent toutes les deux une forte rigidité mécanique. Ainsi, le diffuseur de gaz 30 est apte à résister aux contraintes mécaniques exercées par le gaz de coupure lors de son passage.

Avantageusement, la couche centrale 40 comporte, sur au moins une de ses faces principales, des plots d'espacement 60, configurés pour maintenir l'une des couches extérieures 42 ou 44 adjacentes à cette face à une distance prédéterminée de la couche centrale 40. Ceci permet d'éviter que les couches 42 et 44 ne bouchent tout ou partie des orifices 46, par exemple suite à une déformation.

Dans cet exemple, des plots d'espacement 60 sont ménagés sur les deux faces principales amont et aval opposées de la couche 40, de manière à maintenir chacune des couches extérieures 42 et 44 à une distance prédéterminée. Les plots 60 s'étendent en saillie perpendiculairement par rapport à chacune des faces principales. Les plots d'espacement 60 sont ménagés sur des portions pleines 48 de la couche centrale 40. Dans la configuration assemblée du diffuseur de gaz 30, les couches 42 et 44 sont en appui contre les plots d'espacement 60 et sont réparties sur toute la superficie de chacune desdites faces. Ici, les plots d'espacement 60 sont répartis régulièrement sur chacune de ces faces principales et présentent une forme cylindrique, par exemple ayant une base en forme oblongue, telle qu'une ellipse.

Par exemple, la couche 40 comporte, sur chacune de ses faces principales, un rebord 61 qui s'étend sur toute la périphérie de cette face autour d'une partie centrale de la couche 40. L'épaisseur de la couche 40 est plus importante sur le rebord 61 que sur la partie centrale. Les premières ouvertures 46 et les plots d'espacement 60 sont ménagés uniquement dans la partie centrale. L'épaisseur d1 de la couche 40 est ici mesurée au niveau de ce rebord 61. L'épaisseur des plots d'espacement 60, mesurée selon une direction parallèle à l'axe X1 est telle qu'elle n'induit pas de surépaisseur par rapport au rebord 61. Ainsi, dans la configuration montée du diffuseur de gaz 30, les plaques 42 et 44 sont, sur chaque face de la couche centrale 40, en appui à la fois sur le rebord 61 et sur les plots d'espacement 60. Ici, cette distance prédéterminée est non nulle. Cette distance prédéterminée est ici mesurée au niveau de la partie centrale, selon une direction perpendiculaire au plan de la couche 40. Cette distance est ici déterminée par l'épaisseur des plots d'espacement 60.

En variante, la couche centrale 40 peut ne comporter des plots d'espacement 60 que sur sa face amont, c'est-à-dire celle qui est tournée vers l'orifice d'échappement 24 dans la configuration montée de l'appareil électrique 2. Cela permet d'éviter une déformation de la couche 42 lors du passage du gaz de coupure, du fait de la pression élevée de ce dernier.

Avantageusement, les couches extérieures 42 et 44 sont reliées l'une avec l'autre par un raccord flexible 70. Ici, ces raccords 70 ont une forme de lanière et sont au nombre de deux et s'étendent entre les bords inférieurs respectifs des couches extérieures 42 et 44 placés en regard l'un avec l'autre. Le raccord flexible 70 facilite le positionnement et le montage des couches extérieures 42 et 44 de part et d'autre de la couche centrale 40 pendant des étapes de fabrication et d'assemblage du diffuseur de gaz 30. Avantageusement, la couche 40 comporte des encoches 72, ménagées ici sur le rebord 61, chacune apte à recevoir un raccord 70. Ainsi, le raccord 70 est reçu dans l'encoche 72 correspondante sans engendrer de surépaisseur sur le bord de la couche centrale 40.

Avantageusement, la couche 40 comporte, sur chacune de ses faces principales, un élément de maintien 62, configuré pour maintenir fixement la couche extérieure 42 ou 44 correspondante en position sur la couche centrale 40, par exemple par encliquetage. Les éléments de maintien 62 sont ici ménagés en saillie depuis les rebords 61 au niveau des quatre coins de chaque face principale de la couche 40.

Les figures 4 et 5 illustrent un exemple d'assemblage du diffuseur de gaz 30 vers sa configuration montée. Le positionnement des couches extérieures 42 et 44 est d'abord assuré en plaçant la couche centrale 40 entre les couches extérieures 42 et 44, de sorte que les raccords 70 soient reçus dans les encoches 72. Les couches extérieures 42 et 44 sont ensuite rabattues l'une vers l'autre sur la couche centrale 40, dans le sens illustré par les flèches F1 aux figures 4 et 5, jusqu'à ce que les couches extérieures 42 et 44 viennent complètement en appui contre les rebords 61 et contre les plots d'espacement 60 de la couche centrale 40. Les bords des couches extérieures 42 et 44 sont reçus par les éléments de maintien 62 qui maintiennent ensuite ces couches fixement en position. Dans la configuration montée, chaque couche extérieure 42 et 44 est alors maintenue à une distance prédéterminée de la partie centrale de la couche 40.

Selon un autre mode de réalisation, les couches extérieures 42 et 44 comportent chacune une plaque rigide en matière plastique précédemment décrite et la couche centrale 40 comporte la plaque en matériau synthétique précédemment décrite incluant les fibres de polyamide aromatiques. Un diffuseur selon ce deuxième mode de réalisation permet d'obtenir une protection acceptable contre le risque de rebouclage du courant électrique d'arc dans le filtre 28, mais présente l'inconvénient d'être plus encombrant que le diffuseur de gaz 30 selon le premier mode de réalisation. En effet, un tel diffuseur présente une épaisseur totale plus élevée, car l'épaisseur des plaques en matière plastique est supérieure à celle des plaques du matériau synthétique. En raison de contraintes industrielles de fabrication, la plaque en matière plastique présente une épaisseur supérieure ou égale à 1 mm ou à 1,5 mm. Ainsi, l'intégration du diffuseur de gaz 30 selon ce deuxième mode de réalisation au sein du système de filtration 26 et de l'appareil électrique 2 est rendue plus délicate.

Selon une variante de cet autre mode de réalisation, les plots d'espacement 60 sont ménagés sur les plaques rigides en matière plastique des couches extérieures 42 et 44, par exemple uniquement les faces de ces plaques qui sont tournées vers la couche centrale 40.

De nombreux autres modes de réalisation sont possibles. Par exemple, l'appareil électrique 2 est un contacteur, ou tout autre appareil électrique destiné à interrompre un courant électrique avec un fort pouvoir de coupure, en réponse à un signal de commande ou à une condition prédéterminée, cet appareil électrique comportant une chambre de coupure d'arc électrique dans l'air analogue à la chambre de coupure 20.

Le système de filtration 26 peut être différent et par exemple comporter plusieurs filtres 28 disposés fluidiquement en série les uns avec les autres. Dans ce cas, le diffuseur de gaz 30 est préférentiellement placé entre l'orifice d'échappement et le premier des filtres 28.

L'appareil électrique 2 peut être un appareil multipolaire, par exemple destiné à être utilisé dans des circuits électriques polyphasés. Il comporte alors, pour chacun des pôles électriques, des terminaux d'entrée et de sortie et une chambre de coupure distincts de ceux des autres pôles électriques. Dans ce cas, un diffuseur identique au diffuseur de gaz 30 est incorporé au sein de chaque système de filtration des gaz associé à chacune de ces chambres de coupure.

Les raccords 70 peuvent être omis, de même que les encoches 72, en particulier dans le cas où les couches 42 et 44 sont formées par la plaque rigide en matière plastique.

Les éléments de maintien 62 peuvent être omis. Dans ce cas, les couches 42 et 44 sont solidarisées à la couche centrale 40 par collage.

Les modes de réalisation et les variantes envisagés ci-dessus peuvent être combinés entre eux pour générer de nouveaux modes de réalisation, dans la mesure où ces variantes restent dans le cadre défini par les revendications ci- après.

## Revendications

1. Appareil électrique (2) de coupure d'un courant électrique, comportant :
- deux contacts électriques (10, 12) séparables raccordés à des terminaux d'entrée (6) et de sortie (8) d'un courant électrique ;
- une chambre de coupure (20) d'un arc électrique, pour éteindre un arc électrique formé lors de la séparation des contacts électriques, cette chambre de coupure étant pourvue d'un orifice (24) d'échappement d'un gaz de coupure,
- un système de filtration (26) du gaz de coupure, placé en sortie de l'orifice d'échappement et comportant un filtre (28) et un diffuseur de gaz (30) réalisé en matériau électriquement isolant, le diffuseur de gaz étant intercalé entre l'orifice d'échappement (24) et le filtre (28) ;
**caractérisé en ce que** le diffuseur de gaz (30) comporte, superposées entre elles, une couche centrale (40) et deux couches extérieures (42, 44) disposés de part et d'autre de la couche centrale, la couche centrale (40) étant pourvue de premières ouvertures (46) traversantes, chaque couche extérieure (42, 44) étant pourvue de deuxièmes ouvertures (50, 52) traversantes, les premières ouvertures étant désalignés par rapport aux deuxièmes ouvertures de sorte que chacune des deuxièmes ouvertures débouche sur une portion pleine (48) de la couche centrale dépourvue de première ouverture (46).

2. Appareil électrique (2) selon la revendication 1, **caractérisé en ce que** l'une ou l'autre de la couche centrale (40) d'une part et des couches extérieures (42, 44) d'autre part comporte une plaque rigide en matière plastique, l'autre de la couche centrale (40) d'une part et des couches (42, 44) extérieures d'autre part comporte une plaque d'un matériau synthétique comportant des fibres de polyamide aromatique

3. Appareil électrique (2) selon la revendication 2, **caractérisé en ce que** la couche centrale (40) comporte une plaque rigide en matière plastique, les couches extérieures (42, 44) comportent chacune une plaque d'un matériau synthétique comportant des fibres de polyamide aromatique.

4. Appareil électrique (2) selon la revendication 3, **caractérisé en ce que** les couches extérieures (42, 44) sont reliées entre elles par un raccord flexible (70).

5. Appareil électrique (2) selon l'une des revendications 2 à 4, **caractérisé en ce que** la plaque rigide en matière plastique comporte, sur au moins une de ses faces, des plots d'espacement (60) s'étendant en saillie par rapport à cette face, pour maintenir la plaque d'un matériau synthétique adjacente à cette face à une distance prédéterminée de la plaque rigide dans une configuration assemblée du diffuseur de gaz (30).

6. Appareil électrique (2) selon l'une des revendications précédentes, **caractérisé en ce que** les premières ouvertures (46) ont une forme de losange dont les côtés sont incurvés vers le centre (54) du losange.

7. Appareil électrique (2) selon l'une des revendications précédentes, **caractérisé en ce que** chacune des couches extérieures (42, 44) présente une porosité comprise entre 10% et 40%, de préférence entre 15% et 30%.

8. Appareil électrique (2) selon l'une des revendications précédentes, **caractérisé en ce que** les premières ouvertures (46) sont disposées en quinconce par rapport aux deuxièmes ouvertures (50, 52).

9. Appareil électrique (2) selon l'une des revendications précédentes, **caractérisé en ce que** les couches extérieures (42, 44) sont identiques.

## Patentansprüche

1. Elektrische Vorrichtung (2) zur Unterbrechung eines elektrischen Stroms, aufweisend:
- zwei elektrische Kontakte (10, 12), die trennbar an einen Eingangsanschluss (6) und einen Ausgangsanschluss (8) für einen elektrischen Strom angeschlossen sind;
- eine Kammer (20) zum Unterbrechen eines Lichtbogens, um einen während der Trennung der elektrischen Kontakte gebildeten Lichtbogen zu löschen, wobei diese Unterbrecherkammer mit einer Öffnung (24) für den Auslass eines Schaltgases versehen ist,
- ein System (26) zum Filtern des Schaltgases, das am Austritt der Auslassöffnung angeordnet ist und ein Filter (28) und einen Gasdiffusor (30) aufweist, der aus einem elektrisch isolierenden Material hergestellt ist, wobei der Gasdiffusor zwischen der Auslassöffnung (24) und dem Filter (28) angeordnet ist;
**dadurch gekennzeichnet, dass** der Gasdiffusor (30), zueinander übereinanderliegend, eine Mittelschicht (40) und zwei Außenschichten (42, 44) aufweist, die beidseitig der Mittelschicht liegen, wobei die Mittelschicht (40) mit ersten hindurchgehenden Öffnungen (40) versehen ist und jede Außenschicht (42, 44) mit zweiten hindurchgehenden Öffnungen (50, 52) versehen sind, wobei die ersten Öffnungen in Bezug auf die zweiten Öffnungen derart versetzt sind, dass jede der zweiten Öffnungen auf einem vollen Bereich (48) der Mittelschicht ohne eine erste Öffnung (46) liegt.

2. Elektrische Vorrichtung (2) nach Anspruch 1, **dadurch gekennzeichnet, dass** die eine oder die andere der Mittelschicht (40) einerseits und der Außenschichten (42, 44) andererseits eine starre Platte aus Kunststoff aufweist, die andere der Mittelschicht (40) einerseits und der Außenschichten (42, 44) andererseits eine Platte eines synthetischen Materials aufweist, das Fasern eines aromatischen Polyamids aufweist.

3. Elektrische Vorrichtung (2) nach Anspruch 2, **dadurch gekennzeichnet, dass** die Mittelschicht (40) eine steife Platte aus Kunststoff aufweist, die Außenschichten (42, 44) jeweils eine Platte eines synthetischen Materials, das Fasern aus aromatischem Polyamid aufweist, umfasst.

4. Elektrische Vorrichtung (2) nach Anspruch 3, **dadurch gekennzeichnet, dass** die Außenschichten (42, 44) untereinander durch eine flexible Verbindung (70) verbunden sind.

5. Elektrische Vorrichtung (2) nach einem der Ansprüche 2 bis 4, **dadurch gekennzeichnet, dass** die steife Platte aus Kunststoff auf mindestens einer ihrer Seiten Abstandselemente (60) aufweist, die sich in Bezug auf diese Seite hervor erstrecken, um die Platte aus einem synthetischen Material benachbart zu dieser Fläche in einem vorbestimmten Abstand von der steifen Platte in einem zusammengesetzten Zustand des Gasdiffusors (30) zu halten.

6. Elektrische Vorrichtung (2) nach einem der vorhergehenden Ansprüche, **dadurch gekennzeichnet, dass** die ersten Öffnungen (46) eine Form eines Rhombus aufweisen, dessen Seiten zur Mitte (54) des Rhombus gekrümmt sind.

7. Elektrische Vorrichtung (2) nach einem der vorhergehenden Ansprüche, **dadurch gekennzeichnet, dass** jede der Außenschichten (42, 44) eine Porosität zwischen 10% und 40%, vorzugsweise zwischen 15% und 30% aufweist.

8. Elektrische Vorrichtung (2) nach einem der vorhergehenden Ansprüche, **dadurch gekennzeichnet, dass** die ersten Öffnungen (46) in Bezug auf die zweiten Öffnungen (50, 52) versetzt angeordnet sind.

9. Elektrische Vorrichtung (2) nach einem der vorhergehenden Ansprüche, **dadurch gekennzeichnet, dass** die Außenschichten (42, 44) identisch sind.

## Claims

1. Electrical device (2) for interrupting an electric current, comprising:
- two separable electrical contacts (10, 12) connected to input (6) and output (8) terminals for an electric current;
- an electric arc breaking chamber (20) for extinguishing an electric arc formed when the electrical contacts separate, the breaking chamber being provided with an escape orifice (24) for a breaking gas,
- a filtering system (26) for the breaking gas situated at the outlet of the escape orifice and comprising a filter (28) and a gas diffuser (30) made of electrically insulating material, the gas diffuser being interposed between the escape orifice (24) and the filter (28);
**characterised in that** the gas diffuser (30) comprises, superposed one above the other, a central layer (40) and two outer layers (42, 44) arranged on either side of the central layer, the central layer (40) being provided with first through-openings (46), each outer layer (42, 44) being provided with second through-openings (50, 52), the first openings being out of alignment relative to the second openings so that each of the second openings opens onto an unbroken portion (48) of the central layer that does not have a first opening (46).

2. Electrical device (2) according to claim 1, **characterised in that** one or other of the central layer (40), on the one hand, and the outer layers (42, 44), on the other hand, comprises a rigid plate made of plastics material, the other of the central layer (40), on the one hand, and the outer layers (42, 44), on the other hand, comprises a plate made of a synthetic material comprising fibres of aromatic polyamide.

3. Electrical device (2) according to claim 2, **characterised in that** the central layer (40) comprises a rigid plate made of plastics material, the outer layers (42, 44) each comprise a plate made of a synthetic material comprising fibres of aromatic polyamide.

4. Electrical device (2) according to claim 3, **characterised in that** the outer layers (42, 44) are connected to one another by a flexible connection (70).

5. Electrical device (2) according to any one of claims 2 to 4, **characterised in that** the rigid plate made of plastics material comprises, on at least one of its faces, spacer pads (60) which project relative to that face in order to keep the plate made of a synthetic material that is adjacent to that face at a predetermined distance from the rigid plate when the gas diffuser (30) is in an assembled configuration.

6. Electrical device (2) according to any one of the preceding claims, **characterised in that** the first openings (46) are lozenge-shaped, the sides of which lozenge are curved inwards towards the centre (54) of the lozenge.

7. Electrical device (2) according to any one of the preceding claims, **characterised in that** each of the outer layers (42, 44) has a porosity of between 10% and 40%, preferably between 15% and 30%.

8. Electrical device (2) according to any one of the preceding claims, **characterised in that** the first openings (46) are staggered relative to the second openings (50, 52).

9. Electrical device (2) according to any one of the preceding claims, **characterised in that** the outer layers (42, 44) are identical.
